# EUROPEAN PATENT APPLICATION

(11) **EP 1 773 042 A2**
(43) Date of publication of application: **11.04.2007**
(21) Application number: 06021092.9
(22) Date of filing: 06.10.2006
(51) Int. Cl.: H04N 1/12, H04N 1/00

(54) **Document reading apparatus**

(30) Priority: 07.10.2005 JP 2005295210
(71) Applicant: SHARP KABUSHIKI KAISHA, Osaka-shi, Osaka 545-8522 (JP)
(72) Inventor: Tonami, Kazumasa, Yamatokoriyama-shi Nara 639-1123 (JP); Murakami, Satoshi, Yamatokoriyama-shi Nara 639-1150 (JP)
(74) Representative: Müller - Hoffmann & Partner

(57) **Abstract**

A document reading apparatus including: a document tray on which a plurality of document originals are placed; a document reading section for reading images of the document originals; a document feeding section for successively feeding the document originals placed on the document tray into the document reading section; a double feed sensor for detecting a double document feed; an image storing section for storing image data of the read images; an image controlling section for controling the document reading section and storage of the image data in the image storing section upon receiving an output of the double feed sensor; and an informing section for providing information to a user; wherein, when the double document feed is detected, the image controlling section stores image data of a preceding one of double-fed document originals, and causes the informing section to prompt the user to re-feed the other of the double-fed document originals.

## Description

### BACKGROUND OF THE INVENTION

### 1. Field of the Invention

The present invention relates to a document reading apparatus including a document feeder.

### 2. Description of the Related Art

Automatic document feeders are widely employed for document reading apparatuses such as digital multifunction peripherals and scanners. Such automatic document feeders include a document feeder of a type in which a plurality of document originals are set on a document feeding tray in stacked relation and fed one by one to be successively read. The document feeder of this type includes a mechanism for separately feeding the document originals one by one in a feeding section. However, a so-called double document feed phenomenon infrequently occurs, in which two or more document originals are fed in overlapping relation. If the double document feed occurs, the read document original images are not arranged in a correct order, so that the document original images should be re-read from the start. Otherwise, a user who is not aware of the double document feed later recognizes that some of the document original images are missing. In the worst case, the document originals are not available at that time.

To overcome such a drawback, a document feeder including a double feed sensor for detecting the double feed of document originals is proposed (see, for example, Patent Document 1). In the prior art, when the double feed sensor detects the double document feed, a reading operation is interrupted, or document separation means is actuated for separating the double-fed document originals. However, even if the reading operation is interrupted upon the detection of the double document feed, the re-reading of the document original images is troublesome. Further, if the document originals are not properly separated when the document separation means is actuated upon the detection of the double document feed, the troublesome re-reading of the document original images is required.

Known prior art techniques applicable to the present invention include a technique for connecting a plurality of images to one another (see, for example, Patent Document 2) and a technique for correcting the orientation of a document original image by rotating the image according to the degree of skew feed of a document original (see, for example, Patent Document 3).
Patent Document 1: Japanese Unexamined Patent Publication No. HEI10(1998)-120247
Patent Document 2: Japanese Unexamined Patent Publication No. HEI11(1999)-196261
Patent Document 3: Japanese Unexamined Patent Publication No. HEI3(1991)-187570

As described above, the double document feed hinders the reliable and efficient document reading operation. Therefore, it is desirable to improve the document feeding mechanism to prevent the double document feed. However, there are various types of document originals under different conditions, making it difficult to completely eliminate the double document feed.

On the assumption that the occurrence of the double document feed and the subsequent re-reading of the document originals are inevitable, there is a demand for a technique which ensures reliable detection of the double document feed and reduces time required for the subsequent re-reading of the document originals.

### SUMMARY OF THE INVENTION

In consideration of the foregoing, the present invention provides a technique for detecting the double document feed and reducing the time required for the subsequent re-reading of the document originals.

According to the present invention, there is provided a document reading apparatus of comprising: a document tray on which a plurality of document originals are placed; a document reading section for reading images of the document originals; a document feeding section for successively feeding the document originals placed on the document tray into the document reading section; a double feed sensor for detecting a double document feed; an image storing section for storing image data of the read images; an image controlling section for controling the document reading section and storage of the image data in the image storing section upon receiving an output of the double feed sensor; and an informing section for providing information to a user; wherein, when the double document feed is detected, the image controlling section stores image data of a preceding one of double-fed document originals, and causes the informing section to prompt the user to re-feed the other of the double-fed document originals.

In the inventive document reading apparatus, the image controlling section stores the image data of the preceding one of the double-fed document originals upon the detection of the double document feed, and prompts the user to re-feed the other of the double-fed document originals for re-reading. Therefore, even if the double document feed occurs, the image of the preceding document original is read to be stored in the image storing section, so that the otherwise troublesome re-reading operation can be facilitated.

### BRIEF DESCRIPTION OF THE DRAWINGS

Fig. 1 is an explanatory diagram illustrating the mechanical construction of a document reading apparatus according to the present invention;
Fig. 2 is a diagram for explaining how an overlapping portion of double-fed document originals S1, S2 passes through a document reading position P2 in the inventive document reading apparatus 1 of Fig. 1;
Fig. 3 is a block diagram illustrating the electrical construction of a transport controlling section which controls a document transporting operation in the inventive document reading apparatus 1 of Fig. 1;
Fig. 4 is a block diagram illustrating the electrical construction of an image controlling section which controls an image reading operation in the inventive document reading apparatus 1 of Fig. 1;
Figs. 5A, 5B, 6C and 6D are diagrams for explaining operations to be performed for image reading control at particular time points when the document original S1 passes through a double feed sensor 35 and a document platen 2A during transport of the document original S 1 through a document transport path 25 in the inventive document reading apparatus 1 of Fig. 1;
Figs. 7A, 7B, 8C, 8D, 9E, 9F, 10G and 10H are diagrams for explaining operations to be performed for the image reading control at particular time points when double feed of the document originals S1, S2 occurs in the document reading apparatus according to the present invention;
Figs. 11A, 11B, 12C and 12D are diagrams for explaining operations to be performed for the image reading control at particular time points when the double feed of the document originals S1, S2 occurs in the document reading apparatus according to the present invention;
Fig. 13 is an explanatory diagram illustrating a plurality of double feed sensors 35a, 35b arranged perpendicularly to a document transport direction for correction of document skew feed in the document reading apparatus according to the present invention;
Fig. 14 is a diagram for explaining how to determine an image combining margin when skew double feed of the document originals S1, S2 occurs in the document reading apparatus according to the present invention; and
Fig. 15 is a diagram for explaining how to detect the degree of the skew feed of the document original S2 when the double-fed document original S2 is re-read by the document reading apparatus according to the present invention.

### DETAILED DESCRIPTION OF THE PREFERRED EMBODIMENTS

The document reading apparatus of the present invention may further include a document transport path through which the document originals fed from the document feeding section are transported to the document reading section, wherein the double feed sensor may be disposed in the document transport path. Since the double feed sensor is disposed in the document transport path, the double document feed can be detected before the double-fed document originals reach the document reading section.

The double feed sensor may include a first element and a second element disposed in opposed relation with the intervention of the document transport path, wherein the first element may emit ultrasonic waves toward the second element, and the second element may detect the double document feed on the basis of an intensity of ultrasonic waves which are emitted from the first element and reached the second element when the document originals each pass through a space between the first element and the second element. In this case, the double document feed can be accurately detected on the basis of a difference in the intensity of transmitted ultrasonic energy. Further, a highly reliable and less expensive double feed sensor can be realized by using an ultrasonic sensor.

Alternatively, the double feed sensor may include a first element and a second element disposed in opposed relation with the intervention of the document transport path, wherein the first element may emit light toward the second element, and the second element may detect the double document feed on the basis of an intensity of light emitted from the first element and transmitted through a document original when the document originals each pass through a space between the first element and the second element. In this case, the double document feed can be accurately detected on the basis of a difference in the intensity of the transmitted light. Further, a highly reliable and less expensive double feed sensor can be realized by using a light sensor.

The document reading apparatus may further include an image processing section which combines a plurality of partial images, wherein, where a succeeding one of the double-fed document originals has an overlap image portion overlapping with the preceding document original and a non-overlap image portion, the image controlling section may detect the overlap image portion by the double feed sensor, and may store the non-overlap image portion as first image data in the image storing section, and wherein, when the succeeding document original is fed again, the overlap image portion of the succeeding document original may be read to be stored as second image data in the image storing section, wherein the image processing section may perform an image combining operation to combine the first image data and the second image data to provide image data for the succeeding document original. In this case, when the succeeding one of the double-fed document originals is re-read, the image controlling section increases the document transport speed after the overlap image portion of the succeeding document original (an image portion forward of a position at a distance Lr apart from the trailing edge of the succeeding document original) is read. Therefore, the time required for the re-reading is reduced.

Further, the image controlling section may control the storage of the second image data so that a leading edge portion of the first image data and a trailing edge portion of the second image data are superposed one on another when the overlap image portion is read. In this case, an image combining margin can be provided for the image combining operation.

Furthermore, the double feed sensor may include a plurality of double feed sensors arranged perpendicularly to a document transport direction, each double feed sensor detecting a passage of leading and trailing edges of each document original for detecting the double document feed, wherein the image controlling section may detect a degree of skew feed of each of the document originals on the basis of a difference in detection timing of the leading edge and/ or the trailing edge between the double feed sensors, and may control the image combining operation to combine the first image data and the second image data on the basis of the detected skew-feed degree.

The image combining operation may be controlled so as to determine a portion of the second image data to be stored on the basis of the detected skew-feed degree. In this case, the image combining margin can be sufficiently provided in consideration of the document skew feed.

Alternatevely the image combining operation may be controlled so as to combine the first image data with the second image data with inclinations of the overlap image portion and the non-overlap image portion matching each other by rotating at least one of the first image data and the second image data on the basis of the detected skew feed degree. In this case, the overlap image portion and the non-overlap image portion can be neatly combined with each other with their inclinations matching each other.

The document feeding section may be constructed such that a pickup roller is lowered onto a stack of document originals and the uppermost one of the document originals is introduced between a separation roller and a separation plate disposed in contact with a lower portion of the separation roller by a friction force of a surface of the pickup roller. In this case, the separation roller applies a transport force to the uppermost document original and, when a plurality of document originals happen to be introduced in overlapping relation, the lower-side separation plate prevents document originals underlying the uppermost document original from being fed together with the uppermost document original. However, the construction of the document feeding section is not limited to the aforesaid construction. As long as the document originals placed on the document tray can be successively fed, the document feeding section may have a different construction. For example, the document feeding section may be constructed so as to lift the document tray rather than to lower the pickup roller, or may be constructed so as to generate a negative air pressure around an opening of an air port to suck and feed the document originals one by one.

The document reading section reads the document original images, and digitizes the read images into image data. For example, the document reading section may include an image sensor such as a CCD and a reducing optical system, but is not limitative. Alternatively, the document reading section may include a contact image sensor. In the present invention, the document reading section reads the document original images fed from the document feeding section and passing through the document reading section.

The image storing section stores the image data obtained by digitizing the document original images. Examples of the image storing section include a DRAM, a hard disk and a flash memory, which may be used in combination, but are not limitative.

The image controlling section performs an image reading control operation for reading a document original image in synchronism with the transport of the document original, and an image data storing control operation for storing the read image data in the image storing section. The image controlling section may include a circuit which drives the image sensor for reading an image and processes a signal from the image sensor, a data transfer controlling circuit such as a DMA controller for transferring the image data digitized by the image sensor into the image storing section, a CPU for controlling these circuits, and a ROM which stores control programs specifying procedures for processes to be performed by the CPU.

The present invention will hereinafter be described in greater detail with reference to the attached drawings. The invention will be best understood from the following description. It should be understood that the following description is illustrative of the invention in all aspects, but not limitative of the invention.

### Mechanical Construction

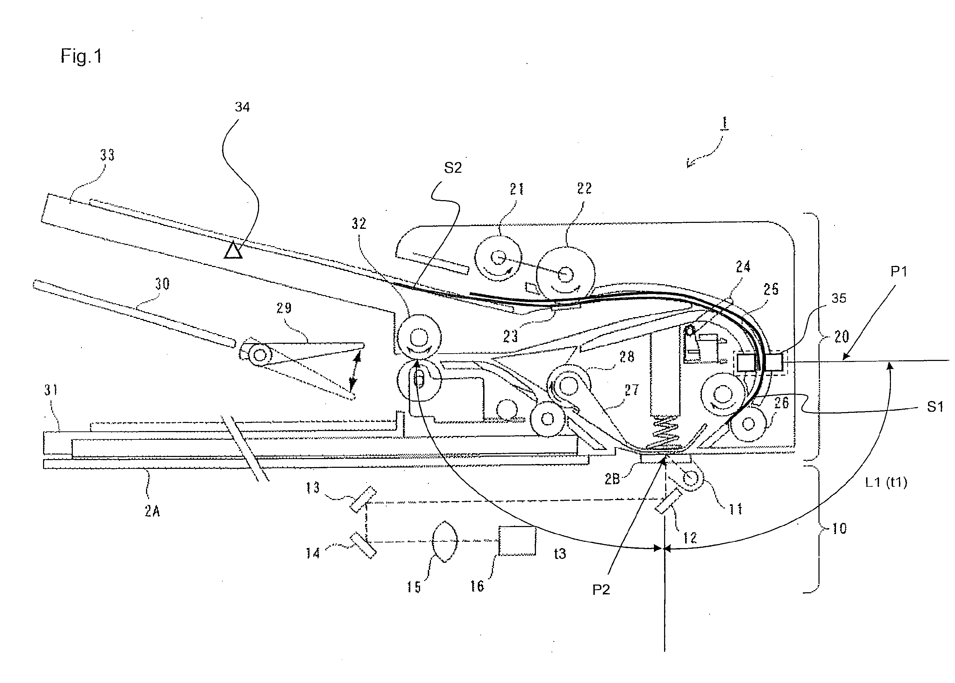

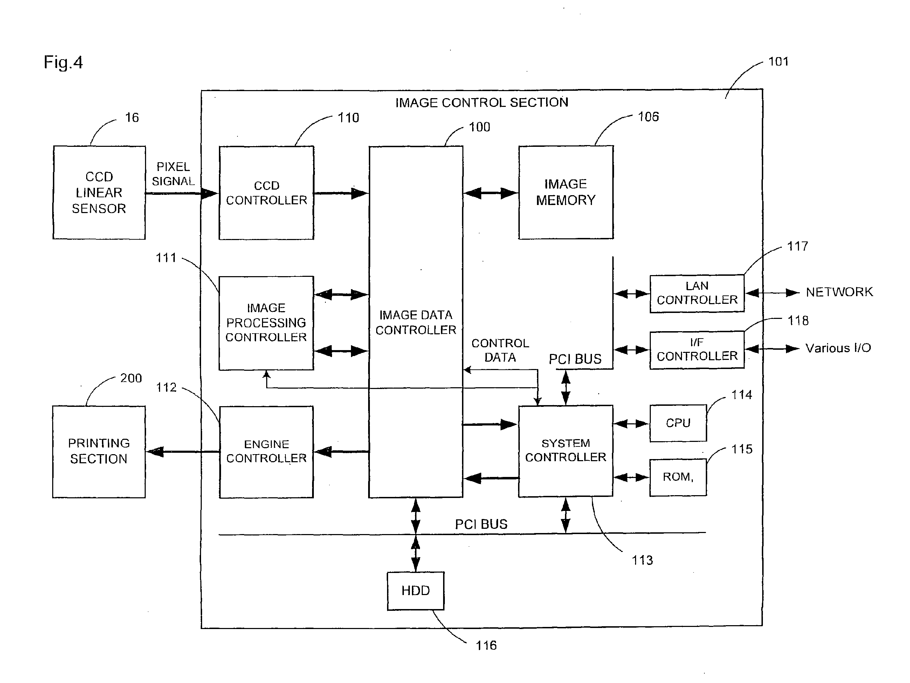

Fig. 1 is an explanatory diagram illustrating the mechanical construction of an inventive document reading apparatus 1 by way of example. As shown in Fig. 1, the inventive document reading apparatus 1 includes a scanner optical system 10 and a CCD linear sensor 16 as the image reading section. The document reading apparatus 1 further includes a pickup roller 21 and a separation roller 22 as the document feeding section. The document reading apparatus 1 further includes a double feed sensor 35 and a document transport path 25. As shown in Fig. 4, the inventive document reading apparatus 1 further includes a circuit unit 101 functioning as the image controlling section and including an image memory 106 as the image storing section. The document reading apparatus 1 further includes an operation panel (not shown) functioning as the information section.

Further referring to Fig. 1, the document reading apparatus 1 includes a table-like document platen 2A and an elongated document platen 2B each composed of platen glass. An automatic document feeder 20 is disposed on the document platens 2A, 2B, and the scanner optical system 10 is disposed below the document platens 2A, 2B.

The scanner optical system 10 includes a light source 11 which emits light toward a document original, mirrors 12 to 14 which guides light reflected from the document original to the CCD linear sensor 16, a photoelectric conversion element as the CCD linear sensor 16, and a through-lens 15 which focuses the light reflected from the document original on the CCD linear sensor 16. The light source 11 and the mirror 12 are unitarily supported in a horizontally movable manner for scanning a document original placed on the document platen 2A for reading the document original. The mirrors 13, 14 are unitarily supported and moved at a speed which is one half the movement speed of the light source 11, so that the length of an optical path extending from a surface of a document original placed on the document platen 2B to the CCD linear sensor 16 is kept constant. The light source 11 and the mirror 12 are located below the document platen 2B, so that a document original passing through a position P2 on the document platen 2B can be read.

On the other hand, the automatic document feeder 20 functions as a document cover for covering and uncovering the document platens 2A, 2B, and includes a document tray 33 on which document originals are placed in stacked relation, and a document exit tray 31 which receives document originals discharged after a reading operation.

The document transport path 25 extends from the document tray 33 to the document exit tray 31 through a document reading position. The pickup roller 21, the separation roller 22, registration rollers 26, transport rollers 28 and document exit rollers 32 are disposed in this order from an upstream side along the document transport path 25. The double feed sensor 35 includes two elements which are disposed in opposed relation with the intervention of the document transport path 25 at a position P1 between the separation roller 22 and the registration rollers 26. The double feed sensor 35 detects double feed of document originals fed from the document tray 33. As shown in Fig. 1, when a document original S 1 is fed together with a document original S2, the double feed sensor 35 detects the double document feed upon passage of a leading edge of the document original S2 through the position P1.

The document reading position is herein defined as the position P2 which is opposed to the document platen 2B in the document transport path 25, and a document original image is read at the document reading position P2 by the scanner optical system 10. A distance between the double-feed detection position P1 of the double feed sensor 35 and the document reading position P2 along the document transport path 25 is defined as L1. During the reading operation, the document original is transported the distance L1 from the position P1 to the position P2 in a period t1.

One exemplary form of the double feed sensor 35 is an ultrasonic wave sensor which includes two elements disposed in opposed relation with the intervention of the document transport path 25, one of the two elements being adapted to generate ultrasonic waves, the other element being adapted to detect vibration energy of ultrasonic waves transmitted through the transported document original. Where a single document original is transported, the ultrasonic vibration energy is easily transmitted through the document original due to the rigidity of the document original. On the other hand, where two or more document originals are transported in overlapping relation, a gap formed between the overlapping document originals acts as a buffer layer. This hinders the transmission of the ultrasonic vibration energy. The detection of the double document feed is based on such a property of the ultrasonic waves. That is, the amount of the energy of the transmitted ultrasonic waves is detected during the passage of the document original through the position P1 of the double feed sensor 35, whereby the double document feed can be accurately detected irrespective of the material and thickness of the document original. Any of known ultrasonic wave sensors may be used as the ultrasonic wave generating element and the ultrasonic wave receiving element. The ultrasonic wave sensors are proven sensors which are widely used in production lines. A less expensive and highly reliable double feed sensor can be provided by utilizing the ultrasonic wave sensor.

Another exemplary form of the double feed sensor is an optical sensor which includes a light emitting element and a light receiving element.

A separation plate 23 is disposed in opposed relation to the separation roller 22 with the intervention of the document transport path 25. When the plurality of document originals are introduced in overlapping relation by the pickup roller 21, the separation roller 22 and the separation plate 23 cooperate to feed one of the document originals located on the separation roller side into the document transport path 25 and stop the other document originals located on the separation plate side by a friction force of the surface of the separation plate 23. However, when more than two document originals are introduced in overlapping relation or when the document originals each have a slippery surface to fail to receive a sufficient stopping force from the separation plate 23, the double document feed possibly occurs.

An incoming document sensor 24 for detecting the transport of the document original is disposed between the separation roller 22 and the registration rollers 26 in the document transport path 25. Further, a document press plate 27 for pressing a document original to be subjected to the reading operation toward the document platen 2B is disposed on a side of the document transport path 25 opposite from the document platen 2B.

As shown in Fig. 1, the document exit rollers 32 are disposed on the most downstream end of the document transport path 25, and an intermediate tray pivot plate 29 for guiding a document original to be discharged selectively either into an intermediate tray 30 or into the document exit tray 31 is disposed in the vicinity of the document exit rollers 32.

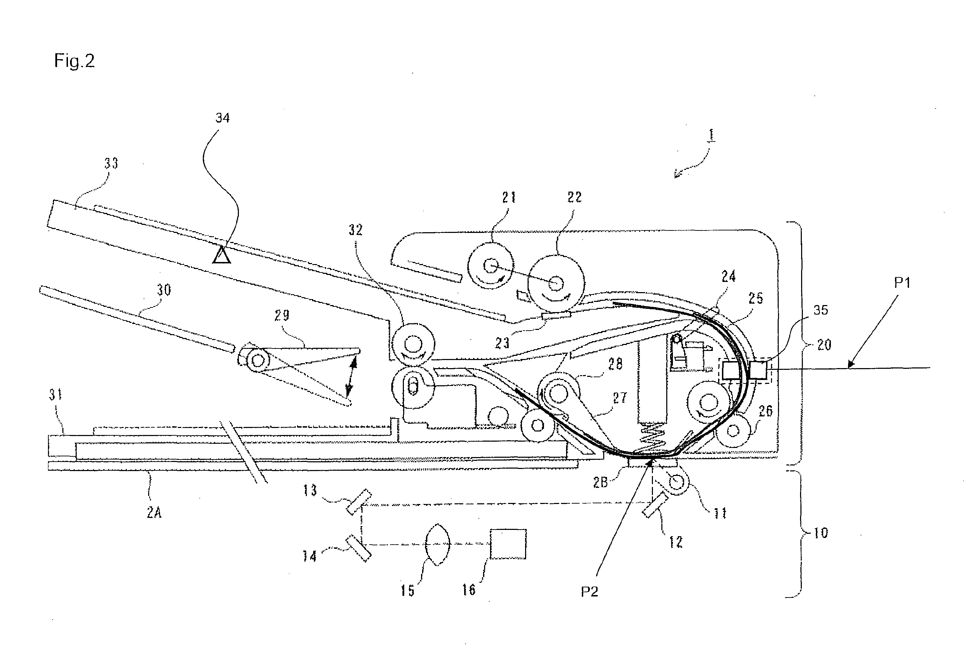

When a document original S1 to be subjected to the reading operation and a document original S2 underlying the document original S2 are double-fed, the leading edge of the document original S2 lags behind the leading edge of the document original S1 in most cases, because the separation plate 23 applies the stopping force to the double-fed document originals. Fig. 1 illustrates a state in which the document original S2 lags behind the document original S1. That is, the document original S1 is herein defined as a preceding document original, and the document original S2 is herein defined as a succeeding document original. Fig. 2 is a diagram for explaining how an overlap portion of the double-fed document originals S1, S2 passes through the document reading position P2. At the position P2, the preceding document original S1 to be read is exposed, and the succeeding document original S2 is unexposed as shown in Fig. 2. That is, when the document originals S1, S2 are double-fed, it is possible to read the entire document original S1 and a portion of the document original S2 not overlapping with the document original S1.

### Electrical Construction

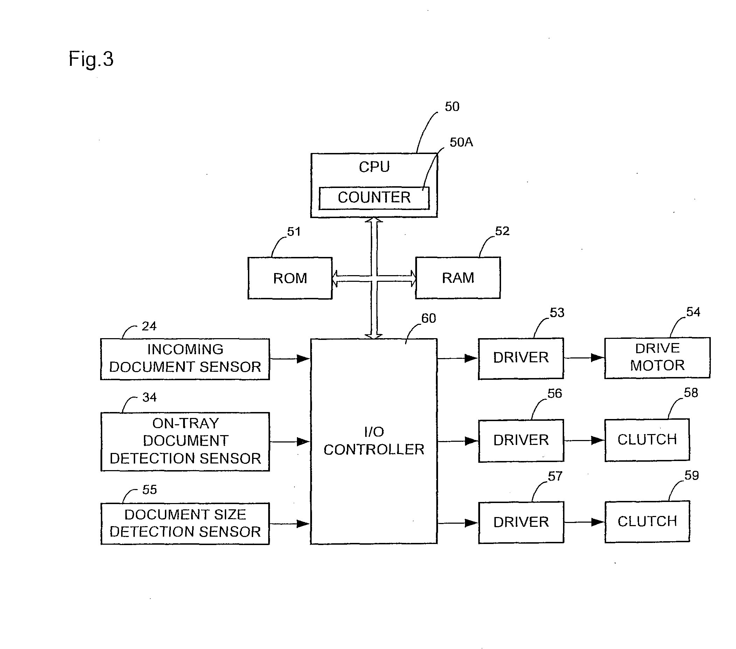

Fig. 3 is a block diagram illustrating the electrical construction of a transport controlling section which controls a document transporting operation in the document reading apparatus 1 of Fig. 1. As shown in Fig. 3, the transport controlling section of the document reading apparatus 1 includes a CPU 50, a ROM 51, a RAM 52, an I/O controller 60, the incoming document sensor 24, an on-tray document detection sensor 34, an document size detection sensor 55, a drive motor 54, clutches 58, 59, and drivers 53, 56, 57. The transport controlling section communicates with the image controlling section 101 via a communication section not shown for transmitting and receiving control information such as control signals and/or commands.

Programs necessary for operating the document reading apparatus 1 through predetermined procedures are stored in the ROM 51. The RAM 52 is a volatile memory for temporarily storing data. The document size detection sensor 55 is disposed on the document tray 33 and, when document originals to be read are set on the document tray 33, detects the size of the document originals. The on-tray document detection sensor 34 is turned on when the document originals are set on the document tray 33, and turned off when all the document originals on the document tray 33 are fed out. The drive motor 54 is a drive source which transmits rotative driving forces to a sheet feed roller and the registration rollers 26. In this embodiment, the separation roller 22 is defined as the sheet feed roller. In the present invention, however, the sheet feed roller is not limited to the separation roller 22, but may be other rollers disposed upstream of the registration rollers 26 in the document transport path 25. The drive motor 54 is controlled to be rotated at a variable rotation speed. More specifically, the rotation speed is changed so as to switch the document transport speed between a transport speed V1 at which the document original is transported to be subjected to the reading operation and a transport speed V2 at which the document original is transported without the reading operation. The transport speed V2 is higher than the transport speed V1.

The clutch 58 switches on and off the transmission of the rotative driving force from the drive motor 54 to the sheet feed roller. The clutch 59 switches on and off the transmission of the rotative driving force from the drive motor 54 to the registration rollers 26. The driver 53 drives the drive motor 54 on the basis of a predetermined signal applied from the CPU 50. The driver 56 drives the clutch 58 on the basis of a predetermined signal applied from the CPU 50. The driver 57 drives the clutch 59 on the basis of a predetermined signal applied from the CPU 50. Thus, the CPU 50 comprehensively controls the operations of the respective components of the document reading apparatus 1. Further, a counter 50A for clocking is incorporated in the CPU 50. The counter 50A measures a period of time elapsed from the start of each of the operations. The CPU 50 outputs the predetermined signals to the drivers 53, 56, 57 to control the rotation of the drive motor 54, the sheet feed roller and the registration rollers 26 via the drivers 53, 56, 57.

Upon receiving a document reading request command, the CPU 50 turns on the driver 53 to rotate the drive motor 54. Further, the CPU 50 turns on the driver 56 to transmit the rotation of the drive motor 54 to the sheet feed roller, thereby controlling the sheet feed roller to feed a single document original. When a leading edge of the fed document original reaches the registration rollers 26, the driver 56 is once turned off to stop the document original in a slack state with the leading edge of the document original abutting against the registration rollers 26. The timing of the turn-off of the driver 56 is determined on the basis of the detection of the leading edge of the document original by the incoming document sensor 24. Thereafter, the drivers 56, 57 are simultaneously turned on to drive the sheet feed roller and the registration rollers 26. Thus, the document original is transported to pass through the document platen 2B. At this time, the CPU 50 controls the scanner optical system to position the mirror 12 below the document platen 2B, and controls the light source 11 to emit light toward the document original. A part of the light emitted from the light source 11 and reflected from the surface of the document original is guided to the CCD linear sensor 16 via the mirrors 12, 13, 14 and the through-lens 15.

Fig. 4 is a block diagram illustrating the electrical construction of the image controlling section which controls an image processing operation for processing signals of an image read by the document reading apparatus 1 of Fig. 1. As shown in Fig. 4, the image controlling section 101 includes an image data controller 100, the image memory 106, a CCD controller 110, an image processing controller 111, an engine controller 112, a system controller 113, a CPU 114, a ROM 115, a HDD 116, a LAN controller 117 and an I/F controller 118. The CCD controller 110 drives the CCD linear sensor 16, and digitizes signals applied from the CCD linear sensor 16 through A/D conversion. The image memory 106 of the DRAM and the HDD 116 function as the image storing section which stores the digitized image signals (image data). The image data controller 100 includes functional blocks such as a DMA controller which transfers the image data to the image storing section, a combining section which combines image data of partial images stored in the image storing section, and a rotating section which rotates the image data. The image processing controller 111 performs a filtering process and a color correcting process on the image data. The CPU 114 determines the order of the functions and the processes to be performed by the respective blocks. The ROM 115 stores control programs specifying procedures for processes to be performed by the CPU 114. The system controller 113 controls CPU buses and provides a timer function. The LAN controller 117 communicates with external devices via a network. The I/F controller 118 functions as interfaces to the document transport controlling section and other controlling sections in the apparatus and I/O devices connected to the external devices. The engine controller 112 outputs the image data to a printing section 200 having a known construction for printing out the image data.

The CPU 50 of the transport controlling section controls the operations of the respective components of the scanner optical system so as to guide the light reflected from the document original passing through the document platen 2B to the CCD linear sensor 16. The CCD controller 110 drives the CCD linear sensor 16 to scan the document original image focused on a sensor surface perpendicularly to the document transport direction (primary scanning direction), and outputs a series of image signals. Since the document original is moved in the transport direction (secondary scanning direction), the document original image is scanned by the CCD linear sensor 16 after the passage of the leading edge of the document original through the document platen 2B before the passage of the trailing edge of the document original through the document platen 2B. Thus, the document original image can be converted into electrical pixel signals. The CCD controller 110 is located after the CCD linear sensor, and includes an A/D converter, which digitizes the image signals outputted from the CCD linear sensor 16 into pixel data. The CCD controller 110 transfers the A/D-converted image data to the image data controller 100. The image data controller 100 controls an image data storing area in the image memory 106 for storing an image portion of a document original. Further, the image data inputted to the image data controller 100 is subjected to the filtering process and the color correcting process by the image processing controller 111, and compressed in the image data controller 100. The compressed data is stored in the HDD 116 serving as the image data storing section. When a reading request command is received from an external host connected via the LAN controller 117, the image data stored in the HDD 116 is read out and expanded by the image data controller 100. After the image data is processed by the image processing controller 111, the resulting image data is transferred to a requesting terminal via a PCI bus and the LAN controller 117.

In this embodiment, the document reading apparatus 1 is a part of a digital multifunction peripheral (MFP). When the read document original image is printed out by the printing section 200, the document original image data is outputted to the printing section (printer) 200 via the engine controller 112. In this embodiment, the printing section 200 includes a known electrophotographic printer engine. The engine controller 112 outputs image data components for black, magenta, cyan and yellow images to the printing section 200. Upon receiving the respective image data components, the printing section 200 forms the respective color images on an electrophotographic photoconductor body on the basis of the respective image data components, and the respective color images are transferred in superposed relation onto a transfer sheet.

The CPU 114 of the image controlling section 101 controls the operations of the CCD controller 110, the image data controller 100, the image processing controller 111, the engine controller 112, the LAN controller 117 and the I/F controller 118. Particularly, the CPU 114 controls the DMA controller of the image data controller 100 to control the timing of starting and ending the reading of the document original image to be stored in the image memory 106 and an image reading width, i.e., an image reading area of the document original. To determine the timing and the image reading area, the CPU 114 communicates with the CPU 50 of the document transport controlling section via the I/F controller 118. Further, the signal of the incoming document sensor 24 may be inputted to the CPU 114 via the I/F controller 118.

### Image Reading Control

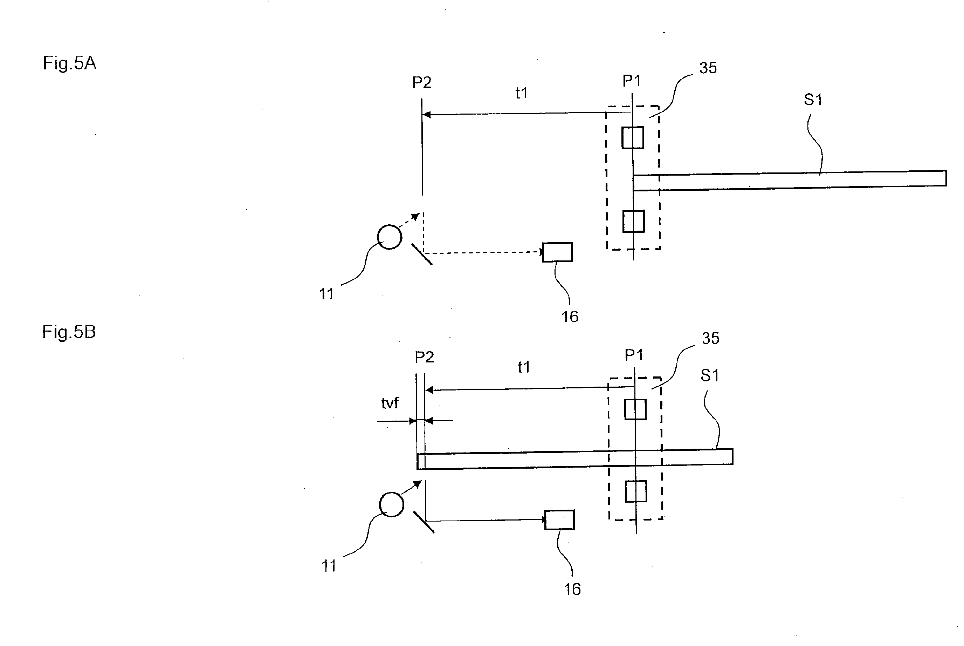

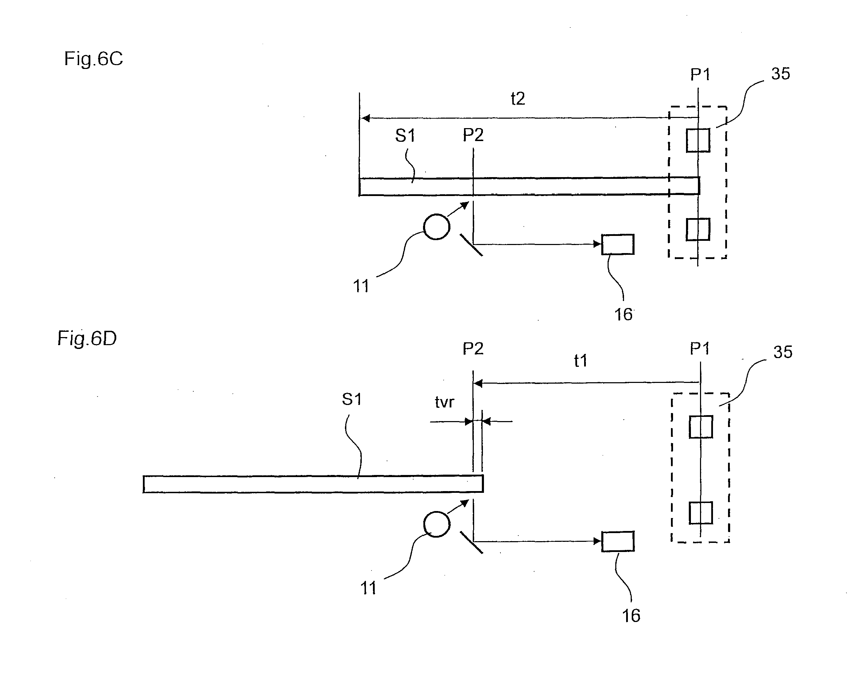

Figs. 5A, 5B, 6C and 6D are diagrams for explaining operations to be performed for the image reading control at particular time points when the document original S 1 passes through the double feed sensor 35 and the document platen 2A during the transport of the document original S1 through the document transport path 25 in the image reading apparatus shown in Fig. 1. In this embodiment, the double feed sensor 35 is adapted not only to detect the double document feed but also to detect the leading edge and the trailing edge of the document original being transported to determine the timing of starting and ending the image reading.

Referring to Fig. 5A, the document original S1 is transported from the right side to the left side at the transport speed V1, and the passage of the leading edge of the document original S1 is detected by the double feed sensor 35. Since the document original S1 is transported at the predetermined transport speed V1 by the transport controlling section, time t1 required for the leading edge of the document original to travel the distance L1 from the position P1 to the document reading position P2 is predictable. However, a reading start position at which the image data controller 100 actually starts reading the document original image is at a predetermined distance (corresponding to a period t_{vf}) from the leading edge of the document original. An area of the document original defined between the leading edge and the actual reading start position is generally called "void area". The void area is a margin provided so as to prevent the leading edge of the document original from appearing in the read image in consideration of steady state errors attributable to mechanical dimensional accuracies and control accuracies and variations in the reading operation.

Fig. 5B illustrates the timing of starting the reading operation by the image data controller 100. The reading operation is started after a lapse of time t1+t_{vf}from the detection of the leading edge of the document original S 1 as shown in Fig. 5A. At this time, the CPU 114 receives a command from the document reading apparatus, and controls the image data controller 100 to store the read image data in the image memory 106. Before the start of the reading operation, the CPU 114 preliminarily applies a request command for actuating the light source 11 to the CPU 50 of the transport controlling section.

Then, the double feed sensor 35 detects the trailing edge of the document original S 1 as shown in Fig. 6C. The CPU 114 measures time t2 required for the passage of the document original S1 through the position P1. The time t2 herein corresponds to the length Lₒ of the document original S1 from the leading edge to the trailing edge. If the passage time t2 is judged to be consistent with a document original size detected by the document size detection sensor 55, the time t2 is stored as the length of the document original S 1 in the RAM 52. The judgment on the consistency of the passage time t2 is made for the following reason. Where document originals having different sizes (e.g., an A3-size document original and an A4-size document original) are set on the document tray 33, the document size detection sensor 55 detects the greatest size (i.e., the A3 size). When the A4-size document original is fed, the time required for the passage of the A4-size document original through the position P1 is approximately one half the passage time for the A3-size document original. The CPU 114 compares the passage time t2 measured when the A4-size document original is fed with upper and lower limits of the passage time preliminarily determined for the A3-size document original and, as a result, judges that the passage time t2 is inconsistent with the passage time for the A3-size document original. In this case, the size of the fed document original is judged to be A4 size. It is herein assumed that the A3-size document original and the A4-size document original are set on the document tray in orientations such that edges thereof having the same length extend perpendicularly to the transport direction.

The trailing edge of the document original S1 passes through the position P2 after a lapse of time t1 from the state shown in Fig. 6C. At this time, the CPU 114 receives a command from the transport controlling section, and controls the image data controller 100 to stop storing the image data in the image memory 106. Since a void area (having a length corresponding to a period tᵥᵣ) is also provided on the trailing edge, the storage of the image data is stopped after a lapse of time t1-tᵥᵣ from the passage of the trailing edge through the position P1. Fig. 6D illustrates the timing of ending the reading operation.

In a modification of the embodiment described above, the timing of starting and ending the image reading operation may be determined based on the detection of the leading edge and the trailing edge of the document original by the incoming document sensor 24. In this case, a distance L1' between the incoming document sensor 24 and the position P2 through which the leading edge and the trailing edge of the document original pass is employed instead of the distance L1 for the image reading control.

When the single document original is fed, i.e., the double document feed is not detected, the image reading control operation is performed in the aforesaid manner. Next, an image reading control operation to be performed when the double document feed is detected will be described.

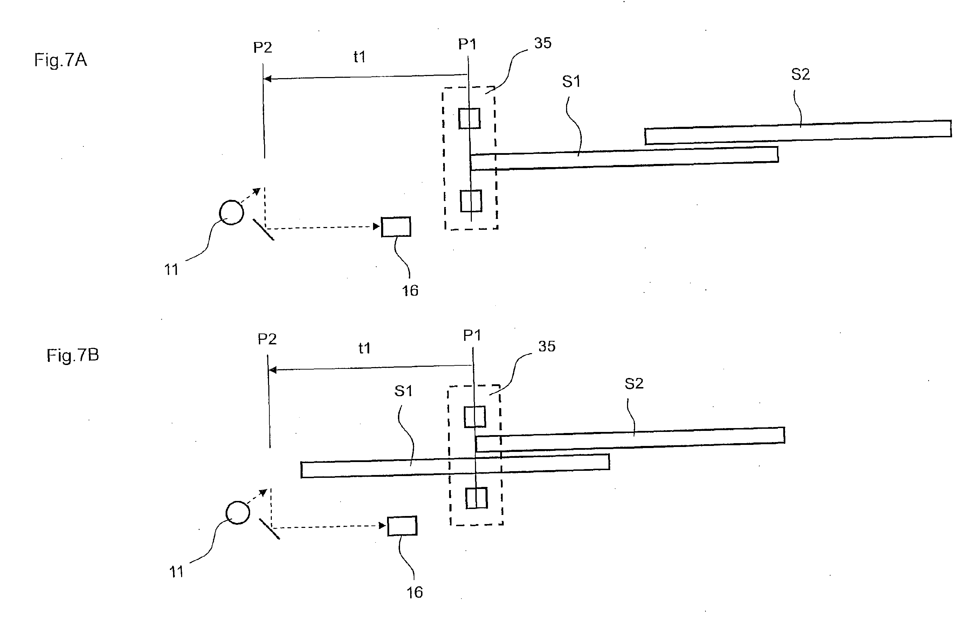

Figs. 7A to 12D are diagrams for explaining operations to be performed for the image reading control at particular time points when the double feed of the document originals S1, S2 occurs. It is herein assumed that the document originals S1, S2 are double-fed in the state shown in Fig. 1. The operations may be performed in an order different from that shown in these figures, depending upon the lengths of the document originals S1, S2, an offset distance between the document originals S1 and S2 and the distance L1.

Referring to Fig. 7A, the passage of the leading edge of the preceding document original S1 through the position P1 is detected by the double feed sensor 35. Further, the double feed of the document originals S1, S2 is detected as shown in Fig. 7B. That is, the leading edge of the document original S2 overlapping with the document original S1 is detected. Upon the detection, the CPU 114 judges that the double document feed occurs.

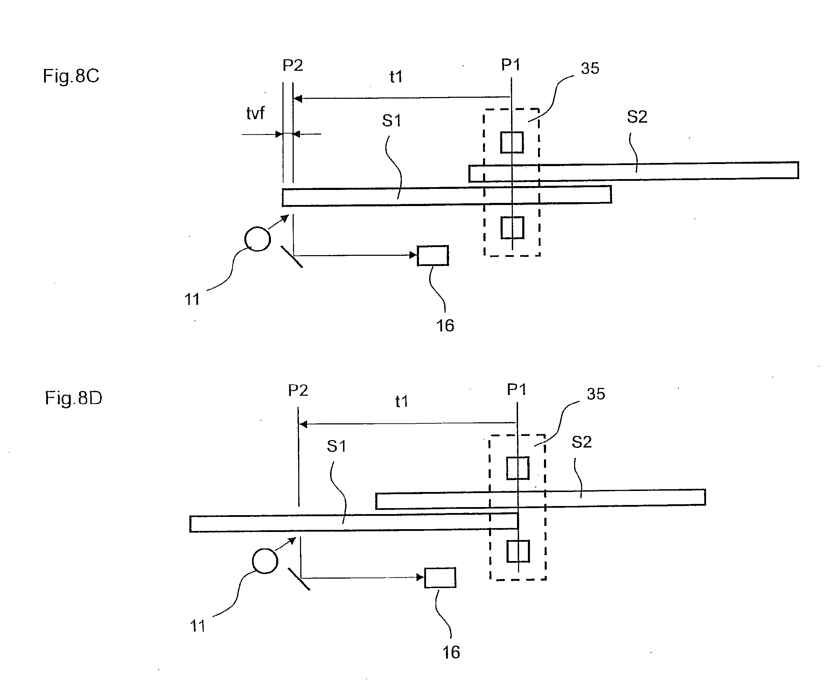

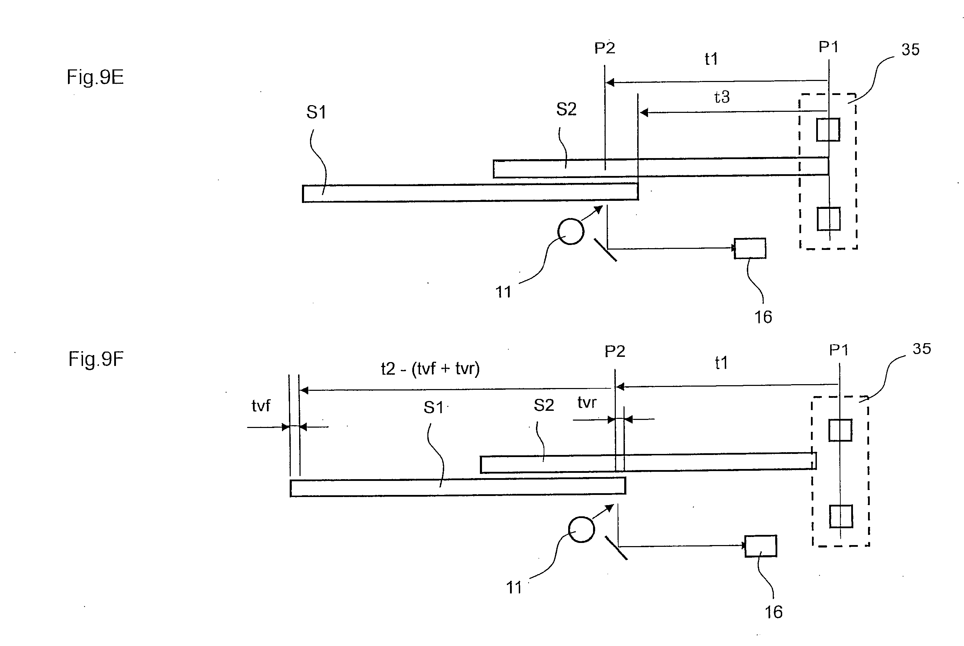

Fig. 8C illustrates the timing of starting the reading operation after a lapse of time t1+t_{vf} from the passage of the leading edge of the document original S1 through the position P1. The timing of ending the reading operation started at the timing shown in Fig. 8C is determined based on the document original passage time t2 determined and stored when the document original is transported without double feed, the period t_{vf} corresponding to the void area on the leading edge and the period tᵥᵣ corresponding to the void area on the trailing edge. After a lapse of time t2-(t_{vf}+tᵥᵣ) from the start of the reading operation, the CPU 114 receives a command from the transport controlling section, and controls the image data controller 100 to end the reading operation. This state is shown in Fig. 9F.

Although the overlap portion of the document originals S 1 and S2 is detected as shown in Fig. 7B, the double feed sensor 35 thereafter detects a leading edge of a non-overlap portion of the document original S2 reaching the position P1. The non-overlap portion of the succeeding document original S2 does not overlap with other document originals. Therefore, an image portion of the non-overlap portion of the document original S2 is exposed and hence can be read.

As shown in Fig. 9E, the double feed sensor 35 thereafter detects the passage of the trailing edge of the document original S2 through the position P1. The CPU 114 measures time t3 required for the document originals S1, S2 to be shifted from a state shown in Fig. 8D to a state shown in Fig. 9E, i.e., time required for the non-overlap portion of the succeeding document original S2 to pass through the position P1, and stores the time t3 in the RAM 52. The time t3 corresponds to the length Lr of the non-overlap portion of the succeeding document original S2.

Fig. 9F illustrates the timing of ending the reading of the document original S1 after a lapse of time t2-(t_{vf}+tᵥᵣ) from the start of the reading operation. The timing of ending the reading of the document original S1 may be determined based on timing at which the leading edge of the non-overlap portion of the succeeding document original S2 passes through the position P1 as shown in Fig. 8D. This timing is equivalent to the timing at which the trailing edge of the document original S1 passes through the position P1. At this time, the CPU 114 receives a command from the transport controlling section, and controls the image data controller 100 to end the reading of the document original S1.

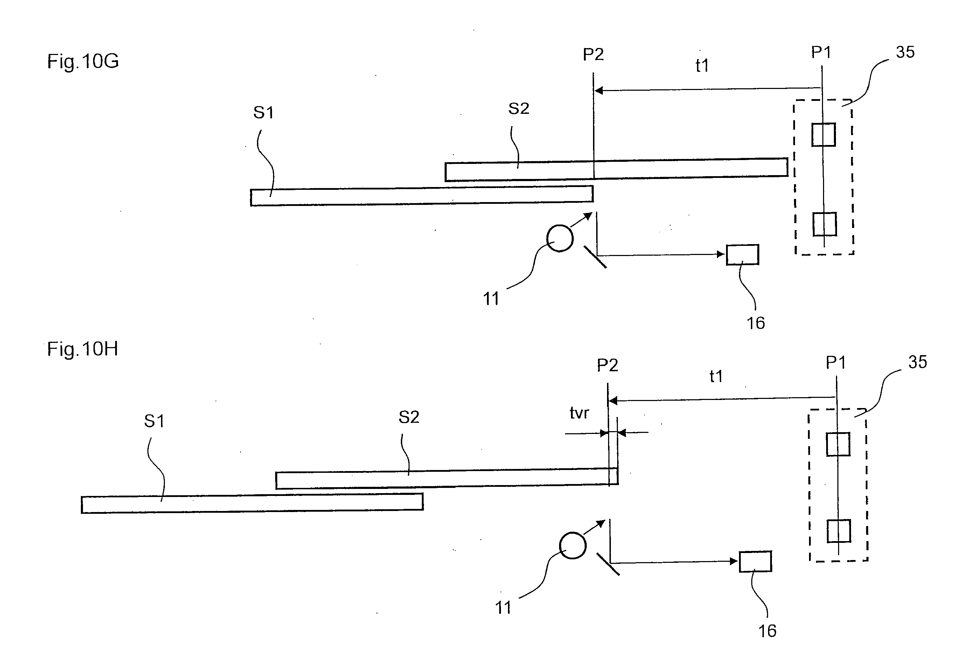

Fig. 10G illustrates a state observed after a lapse of time t1 from the passage of the leading edge of the non-overlap portion of the succeeding document original S2 through the position P1. At this time, the CPU 114 receives a command from the transport controlling section, and controls the image data controller 100 to start reading the image portion of the non-overlap portion of the succeeding document original S2 and store the resulting image data as rear image data in the image memory 106.

Fig. 10H illustrates a state observed after a lapse of time t1-tᵥᵣ from the passage of the trailing edge of the document original S2 through the position P1 (as shown in Fig. 9E). At this time, the CPU 114 receives a command from the transport controlling section, and controls the image data controller 100 to end the reading of the rear image data of the document original

### S2.

As described above, when the double document feed occurs, the CPU 114 controls the image data controller 100 to store the image data in the image memory 106 according to the size of the preceding document original S 1 and further store the rear image data of the succeeding document original S2 in the image memory 106. Then, the feed of document originals subsequent to the document originals S1, S2 is stopped, and a request command is issued for re-feeding the double-fed document originals other than the preceding document original S1 (for re-feeding the succeeding document original S2 in this case).
More specifically, a message indicating the double document feed is displayed on a display screen of the operation panel (not shown) of the document reading apparatus 1 to notify the user of the double document feed and prompt the user to set the succeeding document original S2 again on the document tray 33.

Alternatively, when the double document feed is detected, the CPU 114 may control the image data controller 100 to read all the document originals without stopping the reading of the subsequent document originals. In this case, the ordinal number of the succeeding one of the double-fed document originals is temporality stored and, after all the document originals are read, the user is prompted to set the document originals again before the printing operation is started. At this time, not only the succeeding one of the double-fed document originals but all the document originals are set. Document originals except for the succeeding one of the double-fed document originals are transported without being subjected to the reading operation, and only the succeeding document original is subjected to the reading operation.

When the re-reading of the succeeding document original thus set again is started, the CPU 114 re-reads the image of the succeeding document original. At this time, the rear image data of the succeeding document original is already stored. Therefore, the image reading operation to be performed on the succeeding document original is controlled in the following manner.

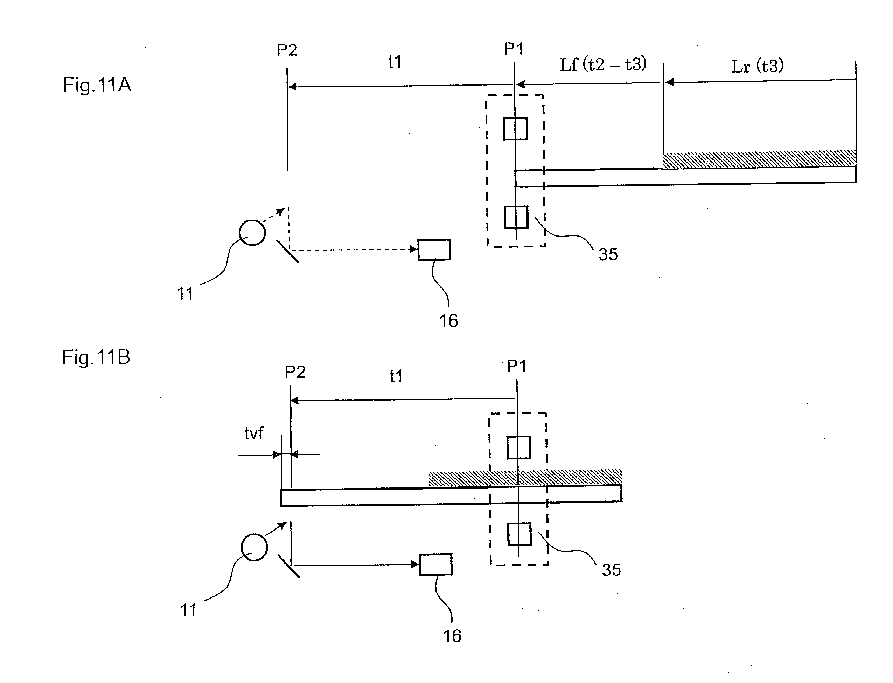

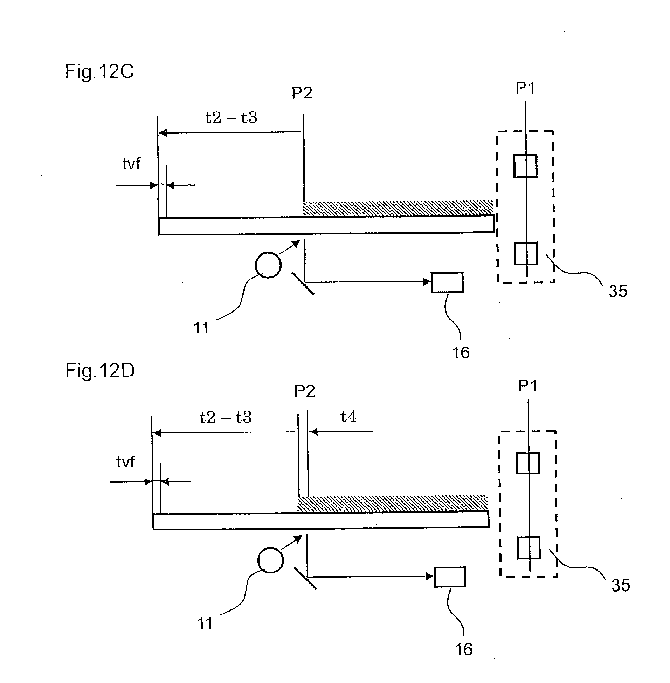

Figs. 11A, 11B, 12C and 12D are diagrams for explaining operations to be performed for the image reading control at particular time points during the re-reading of the succeeding document original S2. In these figures, the time required for the passage of the entire length of the document original S2 is t2, and the non-overlap portion (rear image portion) of the document original S2 whose image data is already stored as the rear image data is hatched. The time required for the passage of the rear image portion of the document original S2 is t3. The time t3 corresponds to the length of the rear image portion of the document original S2. Therefore, time required for the passage of the overlap portion (front image portion) of the document original S2 yet to be read is t2-t3. The time t2-t3 corresponds to the length Lf of the front image portion of the document original S2. The times t2, t3 are already stored in the RAM 52. The CPU 114 acquires the values of the times t2, t3 from the document reading apparatus 1. As shown in Fig. 11A, the passage of the leading edge of the succeeding document original S2 through the position P1 is detected. After a lapse of time t1+t_{vf} from the detection, the CPU 114 receives a command from the transport controlling section, and controls the image data controller 100 to start the reading of the front image portion of the document original S2 (see Fig. 11B).

Thereafter, the leading edge of the rear image portion of the document original S2 reaches the position P2 after a lapse of time t2-t3-t_{vf} from the start of the reading. Thus, the front image portion of the document original S2 is read (see Fig. 12C). The CPU 114 receives a command from the transport controlling section at timing such as to provide an image combining margin, and controls the image data controller 100 to end the reading of the front image portion of the document original S2 (see Fig. 12D). As shown in Fig. 12D, time required for the passage of the image combining margin is t4. After the end of the reading, the CPU 114 controls the transport controlling section to increase the document transport speed to V2 for reducing time required for the transport of the document original to the exit.

After the reading of the front image portion of the document original S2, the CPU 114 causes the image data controller 100 to perform an image combining process for combining the resulting front image data with the rear image data of the document original S2 stored in the image memory 106.
The image combining process is performed by employing the technique described in Patent Document 2. More specifically, the image data controller 100 searches predetermined number of line data present in edge portions of the front image data and the rear image data to be combined with each other for characteristic lines, characteristic symbols and other characteristic image portions to find a data match which is defined as a junction of the front image data and the rear image data. Then, the front image data and the rear image data are arranged so that edges thereof are opposed to each other along the junction. Thereafter, the front image data and the rear image data are extracted perpendicularly to the junction of the front image data and the rear image data. Alternatively, the image data combining process may be performed by fixing one of the front image data and the rear image data, shifting the other image data in the primary scanning direction or in the secondary scanning direction so as to find a proper matching position at which parts of the front and rear image portions match each other, and combining the front image data and the rear image data.

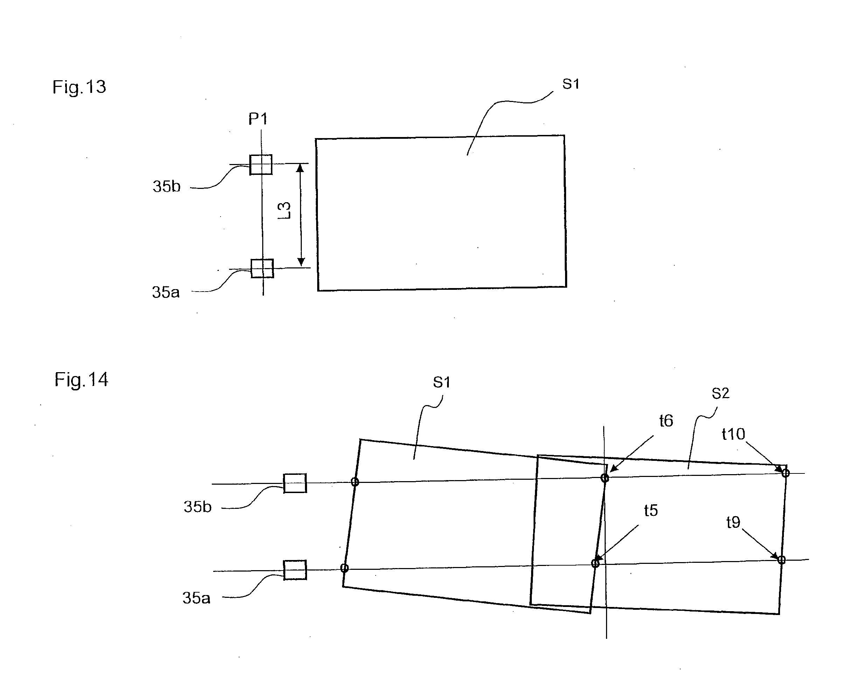

Further, skew feed of the document originals may be detected and corrected to provide a sufficient image combining margin for neatly combining the front and rear image portions. Fig. 13 is an explanatory diagram illustrating a plurality of double feed sensors 35a, 35b arranged perpendicularly to the document transport direction for the correction of the document skew feed. As shown in Fig. 13, the double feed sensors 35a, 35b are spaced a distance L3 from each other.

Fig. 14 is a diagram for explaining how to determine the image combining margin when the skew double feed of the document originals S1, S2 occurs. Referring to Fig. 14, explanation will be first given to how to detect the degree of the skew feed of the document original S1 by the double feed sensors 35a, 35b. When the skew double feed of the document originals S1, S2 occurs, the timing of starting the reading of the succeeding document original S2 is determined based on the timing t6 of detecting the trailing edge of the document original S1 by the double feed sensor 35b, and the timing of ending the reading of the document original S2 is determined based on the timing t10 of detecting the trailing edge of the document original S2 by the double feed sensor 35b. The CPU 50 temporality stores the timing t5 of detecting the trailing edge of the document original S 1 by the double feed sensor 35a together with the detection timing t6 in the RAM 52. When the document original S2 is re-read, the CPU 50 determines the length Lf of the overlap portion (front image portion) of the succeeding document original S2 not subjected to the image reading operation due to the double document feed on the basis of a difference between t5 and t6. Thus, a sufficient image combining margin can be provided between a previously read image portion and a re-read image portion of the document original S2.

When the document original S2 is re-read, the CPU 114 determines a difference t8-t7 between the timing t7 of detecting the leading edge of the document original S2 by the double feed sensor 35a and the timing t8 of detecting the leading edge of the document original S2 by the double feed sensor 35b. Then, the re-reading of the document original S2 is started on the basis of the timing t7 of the detection by the double feed sensor 35a. The timing of ending the re-reading of the front image portion of the document original S2 is determined by adding a standard image combining margin providing period t4 and the time difference t8-t7 to the time required for the passage of the portion Lf without the skew feed. Thus, a sufficient image combining margin can be provided in consideration of the skew feed of the document original in the re-reading.

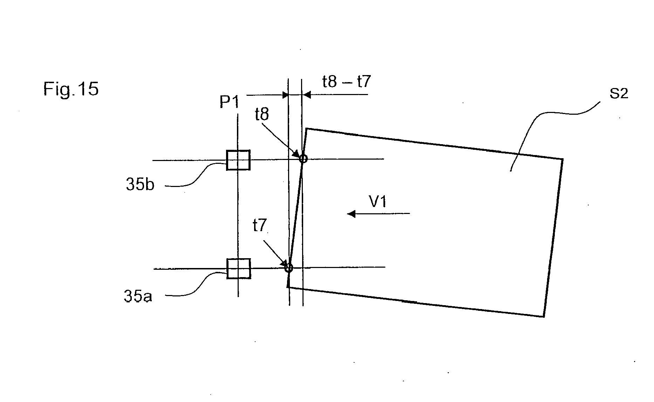

Fig. 15 is a diagram for explaining how to determine the degree of the skew feed of the document original S2 when the double-fed document original S2 is re-read. As shown in Fig. 15, it is herein assumed that, when the leading edge of the document original S2 passes through the position P1 at the transport speed V1, the double feed sensor 35a detects the leading edge at a time point t7 and the double feed sensor 35b detects the leading edge at a time point t8. In this case, the inclination angle of the document original S2 is determined from a detection time difference Δt=t8-t7 and the sensor distance L3. The CPU 114 controls the image data controller 100 to perform an image rotating process (image inclination correcting process) for rotating the image data of the document original S2 into parallel relation to the transport direction according to the inclination angle thus determined.

Further, it is herein assumed that the double feed sensor 35a detects the trailing edge of the document original S2 at a time point t9 and the double feed sensor 35b detects the trailing edge at a time point t10 as shown in Fig. 14. The CPU 114 determines the inclination angle of the document original S2 from a detection time difference t10-t9 and the sensor distance L3. The CPU 114 controls the image data controller 100 to perform the image rotating process (image inclination correcting process) for rotating the image data of the document original S2 into parallel relation to the transport direction according to the inclination angle thus determined.

When the double document feed occurs, the skew of the document original S2 is detected by detecting the inclination of the trailing edge of the document original S2. When the document original S2 is re-read, the skew of the document original S2 is detected by detecting the inclination of the leading edge or the trailing edge of the document original S2. Then, the skew of the rear image portion and the front image portion is corrected according to the detection results. After the correction of the skew of the front and rear image portions, the image combining process is performed for combining the front and rear image portions. Thus, the front and rear image portions are more neatly combined.

Where three or more document originals are fed in overlapping relation and the double feed sensor 35 detects the overlap feed, the CPU 114 stores only image data of the first one of the document originals fed in overlapping relation without storing image data of the second and subsequent document originals, and prompts the user to set the document originals fed in overlapping relation again on the document tray 33. In this case, the image data of the second and subsequent document originals is not stored, so that entire images of the document originals should be re-read.

Obviously, various modifications of the present invention are possible in addition to the embodiments described above. It should be understood that such modifications also fall within the aspects and scope of the present invention. The present invention is intended to embrace all alterations made within the scope of the invention defined by the appended claims and their equivalents.

## Claims

1. A document reading apparatus comprising:
a document tray on which a plurality of document originals are placed;
a document reading section for reading images of the document originals;
a document feeding section for successively feeding the document originals placed on the document tray into the document reading section;
a double feed sensor for detecting a double document feed;
an image storing section for storing image data of the read images;
an image controlling section for controling the document reading section and storage of the image data in the image storing section upon receiving an output of the double feed sensor; and
an informing section for providing information to a user;
wherein, when the double document feed is detected, the image controlling section stores image data of a preceding one of double-fed document originals, and causes the informing section to prompt the user to re-feed the other of the double-fed document originals.

2. A document reading apparatus according to claim 1, further comprising a document transport path through which the document originals fed from the document feeding section are transported to the document reading section, wherein the double feed sensor is disposed in the document transport path.

3. A document reading apparatus according to claim 2,
wherein the double feed sensor includes a first element and a second element disposed in opposed relation with the intervention of the document transport path, and
wherein the first element emits ultrasonic waves toward the second element, and the second element detects the double document feed on the basis of an intensity of ultrasonic waves which are emitted from the first element and reached the second element when the document originals each pass through a space between the first element and the second element.

4. A document reading apparatus according to claim 2,
wherein the double feed sensor includes a first element and a second element disposed in opposed relation with the intervention of the document transport path, and
wherein the first element emits light toward the second element, and the second element detects the double document feed on the basis of an intensity of light emitted from the first element and transmitted through a document original when the document originals each pass through a space between the first element and the second element.

5. A document reading apparatus according to claim 1, further comprising an image processing section which combines a plurality of partial images,
wherein, where a succeeding one of the double-fed document originals has an overlap image portion overlapping with the preceding document original and a non-overlap image portion, the image controlling section detects the overlap image portion by the double feed sensor, and stores the non-overlap image portion as first image data in the image storing section, and
wherein, when the succeeding document original is fed again, the overlap image portion of the succeeding document original is read to be stored as second image data in the image storing section,
wherein the image processing section performs an image combining operation to combine the first image data and the second image data to provide image data for the succeeding document original.

6. A document reading apparatus according to claim 5,
wherein the image controlling section controls the storage of the second image data so that a leading edge portion of the first image data and a trailing edge portion of the second image data are superposed one on another when the overlap image portion is read.

7. A document reading apparatus according to claim 5,
wherein the double feed sensor includes a plurality of double feed sensors arranged perpendicularly to a document transport direction, each double feed sensor detecting a passage of leading and trailing edges of each document original for detecting the double document feed, and
wherein the image controlling section detects a degree of skew feed of each of the document originals on the basis of a difference in detection timing of the leading edge and/or the trailing edge between the double feed sensors, and controls the image combining operation to combine the first image data and the second image data on the basis of the detected skew-feed degree.

8. A document reading apparatus according to claim 7,
wherein the image combining operation is controlled so as to determine a portion of the second image data to be stored on the basis of the detected skew-feed degree.

9. A document reading apparatus according to claim 7,
wherein the image combining operation is controlled so as to combine the first image data with the second image data with inclinations of the overlap image portion and the non-overlap image portion matching each other by rotating at least one of the first image data and the second image data on the basis of the detected skew feed degree.
